Europäisches Patentamt

European Patent Office

Office européen des brevets

(11) Veröffentlichungsnummer: **0 460 667 A2**

## (12) EUROPÄISCHE PATENTANMELDUNG

(21) Anmeldenummer: 91109285.6

(51) Int. Cl.⁵: **H02G 11/00, H01R 35/02**

(22) Anmeldetag: 06.06.91

(30) Priorität: 08.06.90 DE 4018440

(43) Veröffentlichungstag der Anmeldung:
**11.12.91 Patentblatt 91/50**

(84) Benannte Vertragsstaaten:
**CH DE FR GB IT LI**

(71) Anmelder: **W.L. Gore & Associates GmbH
Hermann-Oberth-Strasse 22**
**W-8011 Putzbrunn(DE)**

(72) Erfinder: **Ruesch, Heinz
Meierhofstrasse 16
CH-8820 Wädenswil(CH)**

(74) Vertreter: **Klunker . Schmitt-Nilson . Hirsch
Winzererstrasse 106
W-8000 München 40(DE)**

(54) **Spiralige Leitungsanordnung.**

(57) Spiralige Leitungsanordnung, die einen Endes mit einer um eine Drehachse (DA) hin- und herdrehbaren Vorrichtung und anderen Endes mit einer feststehenden Vorrichtung verbunden ist und bei einer Drehung der drehbaren Vorrichtung ein- oder ausgedreht wird. Die Leitungsanordnung ist durch mindestens zwei um die Drehachse (DA) ein- und ausdrehbare, in Kaskadenschaltung verbundene Leitungsspiralen (S1, S2) gebildet, die in Drehachsenrichtung nebeneinander angeordnet sind und mittels eines Antriebes bei einer Drehung der drehbaren Vorrichtung mit in einem vorbestimmten Verhältnis stehenden unterschiedlichen Umdrehungsgeschwindigkeiten ein- oder ausdrehend gedreht werden, und zwar mit abnehmender Umdrehungsgeschwindigkeit von der mit der drehbaren Vorrichtung verbundenen Leitungsspirale (LS2) zu der mit der feststehenden Vorrichtung verbundenen Leitungsspirale (LS1).

FIG.2

Die Erfindung betrifft eine spiralige Leitungsanordnung gemäß Oberbegriff des Anspruchs 1. Eine derartige Leitungsanordnung ist beispielsweise aus der DE-37 15 118C2 bekannt.

Es ist häufig erforderlich, eine sich hin- und herdrehende Vorrichtung mit einer festen Vorrichtung über Leitungen zu verbinden, um Signale auszutauschen und/oder elektrische Energie zuzuführen und/oder fluide Medium zuzuführen. Beispiele sind Radaranlagen, Panzer mit drehbaren Türmen, Feuerwehrleitern und Roboter, wie sie zunehmend in Produktionsanlagen eingesetzt werden.

Roboter beispielsweise bedürfen vielfältiger Versorgung elektrischer und/oder pneumatischer und/oder hydraulischer Art. Somit ist eine Vielzahl elektrischer und/oder fluider Leitungen erforderlich, um den hin- und herdrehenden Roboter mit ortsfesten Versorgungs- und Signalempfangsquellen zu verbinden.

Ein Problem besteht darin, möglichst hohe Drehwinkel zu realisieren. Dies soll mit möglichst geringem Platzbedarf für die Leitungsanordnung erreichbar sein.

Im Fall elektrischer Leitungen ergibt sich ein geringer Platzbedarf bei Verwendung eines Schleifringes mit Schleifkontakten. Der Schleifring kann an einem Drehfuß der drehbaren Vorrichtung angeordnet sein. Da häufig sehr viele Steuer- und Versorgungsleitungen erforderlich sind, muß ein solcher Schleifring eine große Anzahl von Schleifkontakten aufweisen. Die Schleifringlösung ist mechanisch aufwendig und kostenintensiv und zudem lassen Standdauer und Zuverlässigkeit zu wünschen übrig, da die Schleifringe einem hohen Abrieb und hoher Verschmutzungsgefahr unterliegen.

Diese Probleme vermeidet man mit einer Leitungsspirale. Dabei ist ein die Leitungen enthaltendes Kabel spiralförmig um die drehbare Vorrichtung oder einen Drehfuß der drehbaren Vorrichtung herum angeordnet. Ein Ende der Leitungsspirale ist mit der drehbaren Vorrichtung verbunden, während das andere Ende der Leitungsspirale an eine ortsfeste Vorrichtung angeschlossen ist. Beim Hin- und Herdrehen der drehbaren Vorrichtung kommt es zu einem entsprechenden uhrfederartigen Ein- und Ausdrehen der Leitungsspirale. Dabei lassen sich Drehwinkel von über 360° realisieren. Je höher der erforderliche Drehwinkel ist, umsomehr Windungen muß die Leitungsspirale aufweisen.

Für viele Anwendungen müssen Drehwinkel realisiert werden, die wesentlich höher als 360° liegen, häufig ein vielfaches von 360° sind. Für derartige Drehwinkel bräuchte man Leitungsspiralen mit sehr vielen Spirallagen, was zu großen Spiraldurchmessern und entsprechend großem Platzbedarf sowie entsprechend großer Länge der meist relativ teuren Leitungen führte. Beim Drehen müßte eine aufgrund der vielen Spirallagen schwere Spirale über die Leitungen der Leitungsanordnung gezogen bzw. geschoben werden. Dies führte zu einer hohen Belastung der Leitungsanordnung, zu Stauchungen in der Leitungsspirale und damit zu unsauberer Führung und zu übermäßiger Abnutzung der Leitungsanordnung.

Der Erfindung liegt die Aufgabe zugrunde, eine spiralige Leitungsanordnung verfügbar zu machen, die bei relativ geringem radialen Platzbedarf sehr hohe Drehwinkel und damit Maximaldrehungen zuläßt und dabei eine übermäßige Belastung und unsaubere Führung der Leitungsanordnung vermeidet.

Eine Lösung dieser Aufgabe ist im Anspruch 1 angegeben und kann den Unteransprüchen gemäß vorteilhaft weitergebildet werden.

Die Grundidee der Erfindung besteht darin, zwei oder mehr Leitungsspiralen in Kaskade, also hintereinander, zu schalten und die einzelnen Leitungsspiralen bei einer Drehung der drehbaren Vorrichtung mittels eines Antriebs zwangsweise zu drehen. Dadurch ermöglicht man der hin- und herdrehbaren Vorrichtung in jeder Drehrichtung eine Gesamtumdrehungszahl, die der Summe der Umdrehungszahlen der einzelnen in Kaskade geschalteten Leitungsspiralen entspricht. Die maximal erreichbare Gesamtumdrehungszahl ist also abhängig von der Anzahl der in Kaskade geschalteten Leitungsspiralen und von der Zahl der Spirallagen pro Leitungsspirale oder Kaskadeneinheit. Da prinzipiell beliebig viele Leitungsspiralen hintereinander schaltbar sind, kann theoretisch eine beliebige Anzahl von gleichgerichteten Umdrehungen erreicht werden.

Die einzelnen Kaskadeneinheiten sind folgendermaßen aufgebaut: Zwischen zwei Ebenen, die bei einer bevorzugten Ausführungsform je durch eine Kreisscheibe gebildet werden und die auf der gleichen Drehachse so angeordnet sind, daß beide unabhängig voneinander gedreht werden können, sind Leitungen zur Übertragung beliebiger Energien und Medien in schneckenartiger Spiralform verlegt, wobei ein Ende der Leitungsspirale mit der einen Ebene und deren anderes Ende mit der anderen Ebene verbunden und mit dieser gedreht wird. Diese Anordnung läßt aufgrund von gegebenen Abmessungen eine bestimmte Anzahl Drehungen der einen Ebene relativ zur anderen Ebene zu. Zur ersten Kaskadeneinheit wird eine zweite Kaskadeneinheit in Reihe geschaltet, indem eine weitere, dritte Ebene auf der gleichen Drehachse so angeordnet wird, daß sich bis auf eine mit der drehfesten Vorrichtung verbundene Ebene jede Ebene unabhängig von den anderen Ebenen drehen läßt. Die Leitungsspiralen benachbarter Kaskadeneinheiten stehen über die beiden Kaskadeneinheiten angehörende mittlere Ebene in Verbindung. Bei bevorzugter Ausbildung der Ebenen als drehbare Kreisscheiben sind die aneinander angrenzenden Enden zweier benachbarter Leitungsspiralen an der dazwischen befindlichen Kreisscheibe befestigt, und zwar vorzugsweise mittels Zwischenverbindern, welche auf der Kreisscheibe angeordnet sind und die sich entsprechenden Leitungen der benachbarten Leitungsspiralen miteinander verbinden.

In analoger Weise können weitere drehbare Ebenen angeordnet werden, bis die gewünschte Anzahl Kaskadeneinheiten erreicht ist, die für einen bestimmten maximalen Drehwinkel erforderlich ist.

Eine der Ebenen, die nicht drehbar ist, ist mit der ortsfesten oder feststehenden Vorrichtung fest verbunden. Eine der drehbaren Ebenen ist mit der drehbaren Vorrichtung fest verbunden. Vorzugsweise sind in dieser drehbaren Ebene und in der feststehenden Ebene Anschlüsse vorgesehen, mittels welchen die beiden Enden der Leitungsanordnung mit der drehbaren bzw. der feststehenden Vorrichtung verbindbar sind.

Damit die gesamte mit der Kaskade zu erreichende Anzahl von Umdrehungen der Summe der mit den einzelnen Kaskadeneinheiten erreichbaren Anzahl von Umdrehungen entspricht, müssen die einzelnen Ebenen bei einer Drehung der drehbaren Vorrichtung so angetrieben werden, daß sie unterschiedliche Drehgeschwindigkeiten annehmen. Man kann nun jeder Ebene einen gesonderten Antrieb zuordnen oder die einzelnen drehbaren Ebenen über ein Getriebe an einen einzigen Antrieb koppeln. Vorzugsweise geschieht der Antrieb durch die hin- und drehbare Vorrichtung, deren Drehung mittels Getriebe auf die einzelnen drehbaren Ebenen übertragen wird.

Als Getriebe eignen sich Zahnrad-, Riemen-, Kettengetriebe oder andere entsprechende Getriebe.

Es ist sinnvoll, eine Kaskadenanordnung zu wählen, bei der alle Ebenen gleichsinnig drehen und die Drehgeschwindigkeit umso höher ist, je näher an der drehbaren Vorrichtung sich die betreffende Ebene befindet. Weiterhin ist es sinnvoll, die Leitungsspiralen so anzuordnen, daß sich im Drehbetrieb der Kaskadenanordnung alle Spiralen gleichzeitig ein- bzw. ausdrehen. Das bedeutet, daß die Leitungsspiralen benachbarter Einheiten umgekehrten Wickelsinn besitzen müssen, wenn die beiden Leitungsspiralen über ihre inneren Enden oder über ihre äußeren Enden miteinander verbunden werden. Wird jeweils ein inneres Ende einer Leitungsspirale mit dem äußeren Ende einer benachbarten Leitungsspirale verbunden, müssen die benachbarten Leitungsspiralen gleichen Wickelsinn besitzen.

Bei Drehung der mit der drehbaren Vorrichtung verbundenen Ebene dreht sich die zugehörige Leitungsspirale ein bzw. aus, jedoch nicht so stark, wie es der Anzahl der Umdrehungen der Ebene entspräche, da sich die anderen drehbaren Ebenen und damit die anderen Leitungsspiralen zwangsweise mitdrehen. Dies führt dazu, daß sich alle Leitungsspiralen gleichzeitig ein- bzw. ausdrehen, bei entsprechender Wahl der Umdrehungsgeschwindigkeiten benachbarter Ebenen synchron.

Die gleichzeitige Zwangsdrehung aller Ebenen außer der mit der feststehenden Vorrichtung verbundenen Ebene bewirkt, daß die Leitungen der Leitungsanordnung weitgehend unbelastet bleiben. Es wäre zwar auch denkbar, die Kaskadenanordnung ohne Getriebe anzutreiben. Dann müßte aber das Drehen der Ebenen durch Ziehen oder Schieben über die Leitungsspiralen erfolgen. Dies würde zu schlechter Kabelführung, zu Kabelstauchung und zu rascher Abnutzung der Kabel führen.

Die Differenz der Umdrehungsgeschwindigkeiten benachbarter Ebenen ist maßgebend für die Zahl der Umdrehungen, welche die betreffende Leitungsspirale ausführt. Die Längen der Leitungen der einzelnen Leitungsspiralen sollten so gewählt werden, daß die Leitungsspiralen einer jeden Kaskadeneinheit die maximal erforderliche Anzahl von Umdrehungen durchführen können.

Bei einer bevorzugten Ausführungsform ist die Differenz der Drehgeschwindigkeiten benachbarter Ebenen konstant. In diesem Fall müßten alle Leitungsspiralen die gleiche Anzahl von Umdrehungen ermöglichen.

Bei einer besonders bevorzugten Ausführungsform der Erfindung ist die Drehgeschwindigkeit einer jeden drehbaren Ebene halb so groß wie die Drehgeschwindigkeit der schneller drehenden benachbarten Ebene.

Die Leitungsspiralen können mit beliebigen Leitungen aufgebaut sein. Vorzugsweise werden Flachbandkabel verwendet.

Die erfindungsgemäße Leitungsanordnung ermöglicht das Übertragen beliebiger Medien, Energien und/oder Signale. Der Transport flüssiger oder gasförmiger Stoffe kann über eine oder mehrere Fluidleitungen erfolgen, welche in die Leitungsspiralen integriert sind. Es ist jedoch oft vorteilhaft, die Fluidleitungen getrennt zu führen. Für diesen Fall sieht die erfindungsgemäße Kaskadenanordnung die Ausführung der Drehachse als Hohlrohr vor, durch das die Fluidleitungen von der feststehenden Vorrichtung zur drehenden Vorrichtung geführt werden. Um Verdrillungen der Fluidleitungen zu vermeiden, erfolgt deren Anschluß an die drehende Vorrichtung am geeignetsten über Drehkupplungen.

Die Kaskadenanordnung kann mit einer feststehenden Drehachse aufgebaut sein, wobei die einzelnen Ebenen drehbar um sie gelagert sind, mit Ausnahme der mit der feststehenden Vorrichtung verbundenen Ebene. Es kann auch eine der drehbaren Ebenen drehfest mit der Drehachse verbunden sein. Dann muß die Drehachse in der mit der feststehenden Einrichtung verbundenen Ebene drehbar gelagert sein. Die Lagerung der Drehachse erfolgt vorzugsweise über Kugellager.

Die einzelnen Leitungsspiralen können einfach aus spiralig gewickelten Leitungen bestehen oder aus Spiralen, die gemäß DE-37 15 118C2 mittels vorspannenden elastischen Zusatzsträngen in Spiralform gehalten werden. Letzteres mag bei Spiralen großen Durchmessers vorteilhaft sein. Die einzelnen Kaskadeneinheiten können aber auch mit einer Leitungsführung gemäß P 40 01 880.6 aufgebaut sein. In diesem Fall werden in den einzelnen Kaskadeneinheiten keine spiralig gewickelten Leitungen verwendet sondern es werden in jeder Kaskadeneinheit mehrere Leitungen nebeneinander in zur Drehachse konzentrischer U-Schlaufenform geführt, wobei die zu verschiedenen Schlaufensträngen gehörenden freien Strangenden mit der einen bzw. der anderen benachbarten Kaskadeneinheit, im Fall einer mit der feststehenden Vorrichtung benachbarten Kaskadeneinheit mit der feststehenden Vorrichtung bzw. der benachbarten Kaskadeneinheit und im Fall einer mit der drehbaren Vorrichtung benachbarten Kaskadeneinheit mit der benachbarten Kaskadeneinheit bzw. der drehbaren Vorrichtung verbunden sind. Dabei sind die Leitungen einer Kaskadeneinheit auf zwei bezüglich der Drehachse gegenläufige Schlaufen aufgeteilt, die sich auf je verschiedener Seite der Drehachse befinden.

Die DE-37 15 118C2 und die P 40 01 880.6 werden hiermit durch Bezugnahme ausdrücklich zum Offenbarungsbestandteil der vorliegenden Anmeldung gemacht.

Die Erfindung wird nun anhand von Ausführungsformen näher erläutert. In den Zeichnungen zeigen:

Figur 1      eine perspektivische Ansicht einer ersten Ausführungsform der Erfindung unter Weglassung der Leitungen;

Figur 2      eine Axialschnittansicht dieser Ausführungsform mit Leitungsspiralen;

Figur 3      schematische Draufsichten auf die Leitungsspiralen zweier benachbarter Kaskadeneinheiten;

Figur 4      eine schematische Axialschnittansicht dieser Ausführungsform mit kugelgelagerter hohlzylindrischer Drehachse; und

Figur 5      eine schematische Draufsicht auf eine Kaskadeneinheit einer zweiten Ausführungsform der Erfindung.

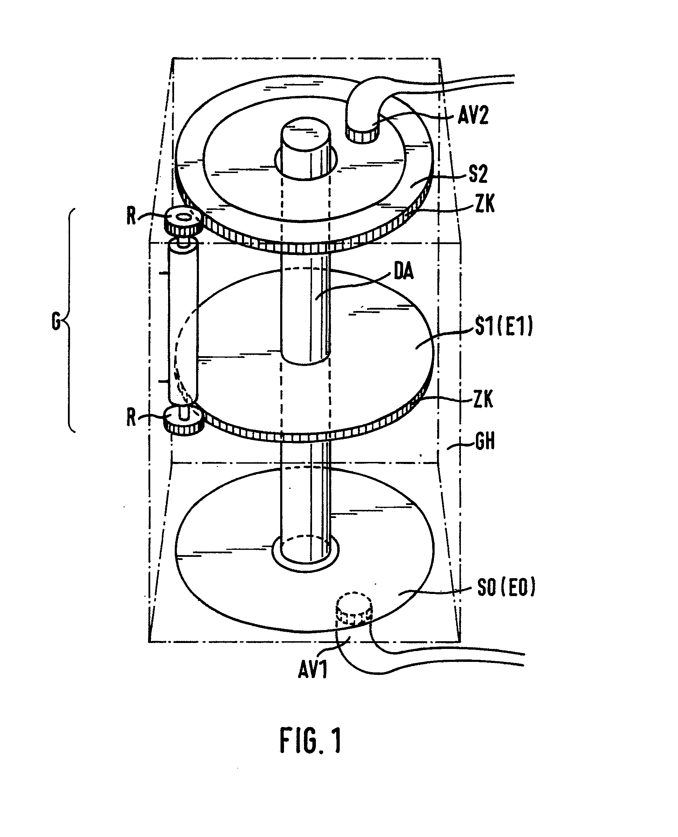

Figur 1 zeigt eine perspektivische Darstellung einer zweistufigen Kaskadenanordnung, die mit zwei Leitungsspiralen oder mit zwei Einheiten mit je zwei zur Drehachse konzentrischen U-Leitungsschlaufen aufgebaut ist. Dabei sind die Leitungen nicht gezeigt. In einer in Figur 1 unteren Ebene E0 befindet sich eine untere Scheibe S0, die drehfest mit einer feststehenden Vorrichtung (nicht gezeigt) verbunden ist. In der Scheibe S0 ist eine Drehachse DA drehbar gelagert. In einer mittleren Ebene E1 ist eine drehbare Scheibe S1 drehfest mit der Drehachse DA verbunden. In einer in Figur 1 oberen Ebene E2 befindet sich eine obere drehbare Scheibe S2, die mit einer drehbaren Vorrichtung (nicht gezeigt) drehfest verbunden ist und um die Drehachse DA drehbar gelagert ist. Die Scheiben S1 und S2 sind an ihren Umfängen mit Zahnkränzen ZK versehen, die mit Ritzeln R eines Getriebes G derart kämmen, daß bei Drehung der Scheibe S2 die Scheibe S1 gleichsinnig mitgedreht wird. Dabei wird die obere Scheibe S2 von der drehbaren Vorrichtung angetrieben. Der Antrieb von der drehbaren Vorrichtung auf das Getriebe kann auch an anderer Stelle erfolgen.

Die Scheiben S2 und S0 sind mit Anschlußverbindern AV2 bzw. AV0 versehen, mittels welchen die entsprechenden Enden der Leitungsanordnung mit der drehbaren Vorrichtung bzw. der feststehenden Vorrichtung verbindbar sind. In Figur 1 sind die von den beiden Anschlußverbindern AV2 und AV0 wegführenden Leitungen angedeutet.

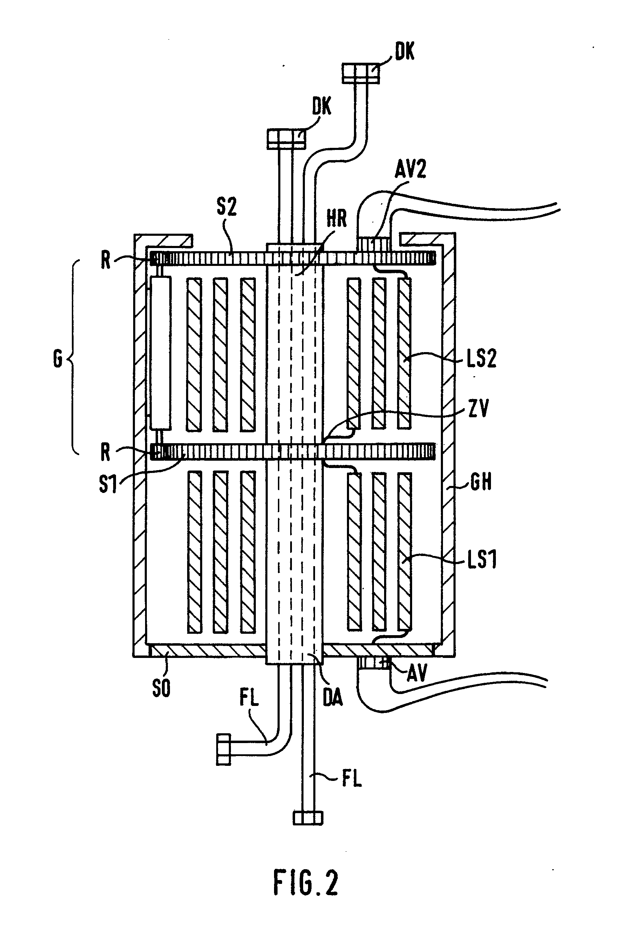

Figur 2 zeigt wie Figur 1 eine aus zwei Kaskadeneinheiten aufgebaute Kaskadenanordnung, jedoch mit Leitungsanordnung. Die Drehachse DA wird durch ein Hohlrohr gebildet, das drehbar in der feststehenden unteren Scheibe S0 gelagert ist und auf dem sich die obere drehbare Scheibe S2 drehen kann. Die Scheibe S1 ist drehfest mit dem Hohlrohr verbunden. Die in Figur 2 untere Leitungsspirale LS ist mit ihrem äußeren, einem Gehäuse GH zugewandten Ende mit der feststehenden Scheibe S0 und über den unteren Anschlußverbinder AV0 mit der feststehenden Vorrichtung verbunden. Die Leitungsspirale LS1 ist an ihrem inneren, der Drehachse DA zugewandten Ende drehfest mit der mittleren Scheibe S1 und über einen dort befindlichen Zwischenverbinder ZV mit dem inneren Ende der in Figur 2 oberen Leitungsspirale LS2 verbunden, wobei deren inneres Ende ebenfalls über den Zwischenverbinder ZV drehfest mit der Scheibe S1 verbunden ist. Das äußere Ende der oberen Leitungsspirale VS2 ist mit der oberen Scheibe S2 verbunden, und zwar mittels des oberen Anschlußverbinders AV2. Die beiden Leitungsspiralen VS1 und VS2 der beiden Kaskadeneinheiten weisen die gleiche Anzahl von Spirallagen auf. Daher ist die Differenz der Drehgeschwindigkeiten zwischen den Scheiben S2 und S1 gleich der relativen Drehgeschwindigkeit der Scheibe S1 gegenüber der feststehenden Scheibe S0. Bei dieser speziellen Ausführungsform sind die Getriebe-Übersetzungsverhältnisse so zu wählen, daß sich die Scheibe S1 mit der halben Umdrehungsgeschwindigkeit der Scheibe S2 mitdreht. Durch die als Hohlrohr ausgebildete Drehachse DA können Fluidleitungen FL oder ähnliches geführt werden zur hydraulischen oder pneumatischen Versorgung der drehbaren Vorrichtung. Dabei sind die Fluidleitungen an ihren Enden mit Drehkupplungen DK versehen, um ein Verdrillen der Fluidleitungen während der Drehung zu verhindern.

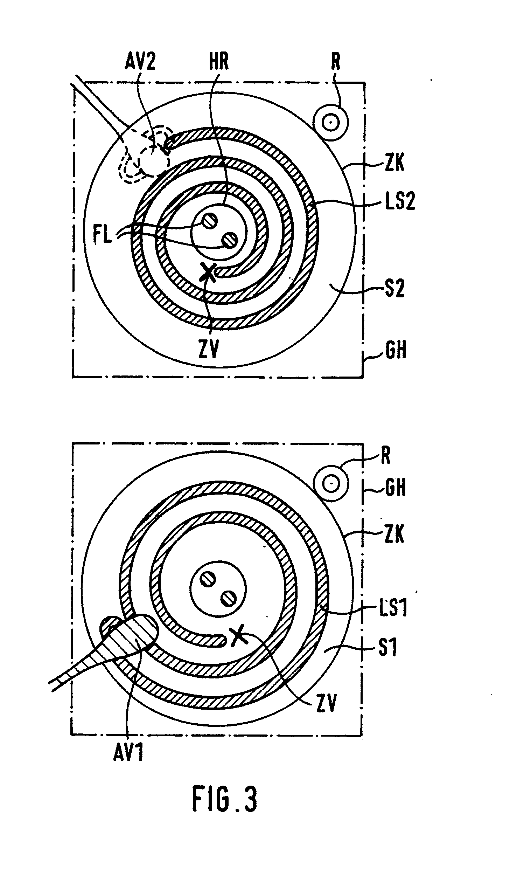

Figur 3 zeigt Draufsichten auf die Leitungsspiralen VS1 und VS2 der in Figur 2 gezeigten Kaskadenanordnung. Da die beiden Leitungsspiralen VS1 und VS2 an ihren jeweils inneren Enden über die Scheibe S1 miteinander verbunden sind, müssen sie entgegengesetzten Wicklungssinn besitzen, damit bei gleichsinniger Drehung der Scheiben S2 und S1 durch das Getriebe G ein synchrones Ein- bzw. Ausdrehen der beiden Leitungsspiralen VS1 und VS2 gewährleistet wird. Bei gleichem Wicklungssinn der beiden Leitungsspiralen VS1 und VS2 würde sich, gleichsinnige Drehung der Scheiben S1 und S2 vorausgesetzt, beim Eindrehen der einen Leitungsspirale die andere Leitungsspirale gleichzeitig ausdrehen. Die äußeren Enden der beiden Leitungsspiralen VS1 und VS2 führen zu den Anschlußverbindern AV0 bzw. AV2 zum Anschluß an die feststehende Vorrichtung bzw. die drehbare Vorrichtung.

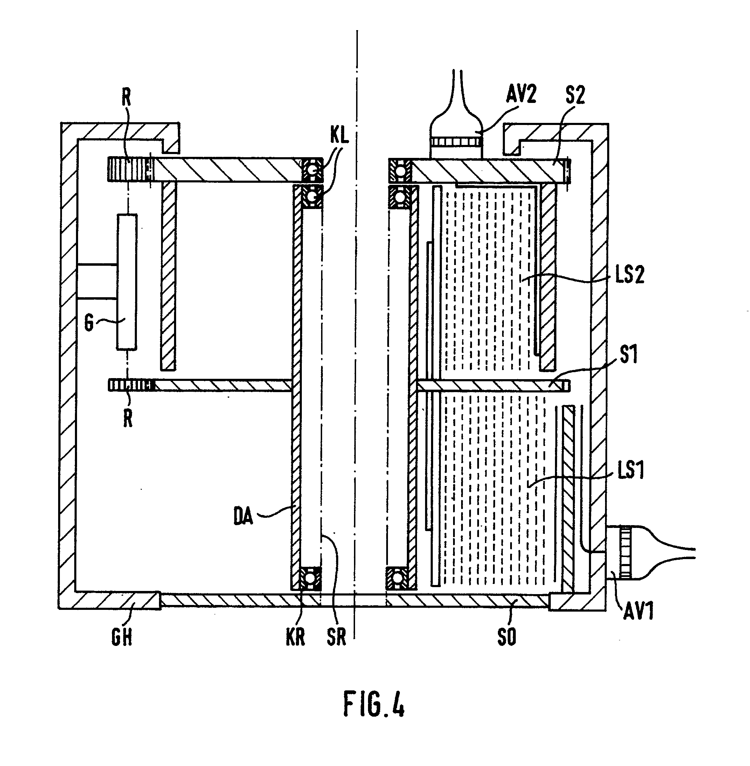

Figur 4 zeigt ein Schnittbild entsprechend Figur 2, jedoch ist hier die Lagerung der Drehachse DA gezeigt. Die mit der Scheibe S1 drehfest verbundene Drehachse DA ist als Hohlrohr HR ausgebildet, das mittels Kugellagern KL drehbar gelagert. Das Hohlrohr HL ist mit einem Standrohr SR ausgekleidet, durch das Fluidleitungen (Figur 2) oder ähnliches geführt werden können.

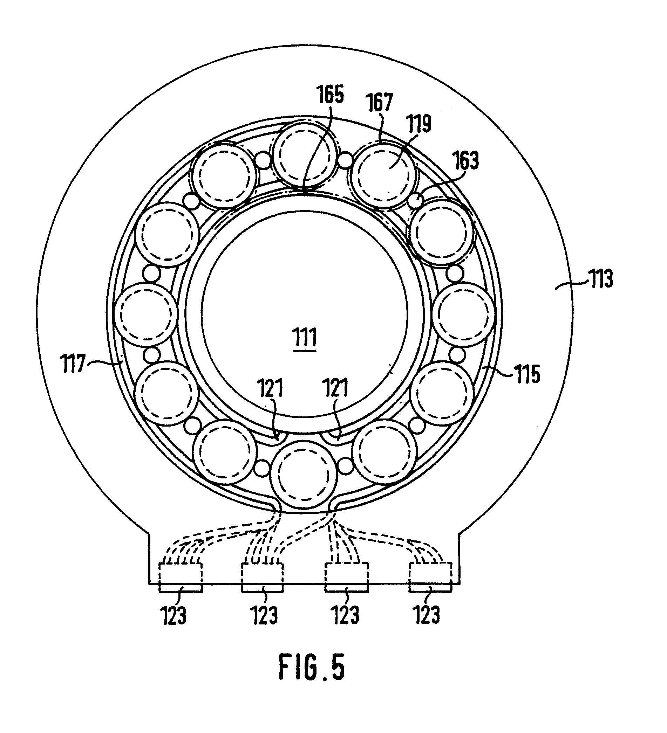

Figur 5 zeigt eine Kaskadeneinheit einer anderen Ausführungsform einer erfindungsgemäßen Kaskadenanordnung. Die in Figur 5 gezeigte Kaskadeneinheit kann anstelle der in Figur 2 gezeigten Kaskadeneinheiten mit Leitungsspiralen verwendet werden. Beispielsweise können die Zwischenräume zwischen den Scheiben S0, S1 und S2 in Figur 1 mit je einer Kaskadeneinheit gemäß Figur 5 versehen werden.

Figur 5 zeigt eine Leitungsführungsanordnung, wie sie in Figur 8 der oben genannten P 40 01 880.6 gezeigt und dort näher beschrieben ist. Diese Leitungsführungsanordnung umfaßt einen drehbaren Körper 111 und einen außerhalb davon konzentrisch angeordneten Gehäusekörper 113. Bei Verwendung dieser Leitungsführungsanordnung für eine Kaskadenanordnung nach Figur 1 ist der Gehäusekörper 113 fest auf der feststehenden Scheibe S0 bzw. auf der drehbaren Scheibe S1 angeordnet während der drehbare Körper 111 drehfest mit der Drehachse DA verbunden ist.

Die Leitungsführungsanordnung nach Figur 5 umfaßt zwei Leitungen, die je in einer U-Schlaufenform 115 bzw. 117 um Führungsrollen 119 herumgeführt sind, die mittels Abstandsrollen 163 auf Abstand voneinander gehalten werden. Jede Schlaufe 115, 117 weist ein mit dem drehbaren Körper 111 mitdrehendes Ende 121 und ein an dem feststehenden Gehäuse 113 mittels Verbindern 123 festgelegtes Ende auf. Der drehbare Körper 111 und die Führungsrollen 119 sind an ihren Außenumfängen mit Zahnkränzen 165 bzw. 167 versehen. Eine Drehung des drehbaren Körpers 111 wird dadurch auf die Führungsrollen 119 übertragen.

Dreht sich der drehbare Körper 111, wird je nach Drehsinn der Innenstrang der einen der beiden Schlaufen 115 und 117 verkürzt und deren Außenstrang verlängert, während bei der anderen Schlaufe der Außenstrang verlängert und der Innenstrang verkürzt wird.

Bei Verwendung der Leitungsführungsanordnung nach Figur 5 in einer erfindungsgemäßen Kaskadenanordnung werden beispielsweise die am drehbaren Körper 111 liegenden Schlaufenenden 121 mit den entsprechenden Schlaufenenden 121 einer benachbarten derartigen Leitungsführungsanordnung verbunden. Entsprechendes gilt für die mit dem feststehenden Körper 113 verbundenen Schlaufenenden.

Bei Montage des feststehenden Körpers 113 auf der Scheibe S0 bliebe es bei einem feststehenden Körper. Bei dessen Montage auf der Scheibe S1 oder S2 würde der Körper 113 zu einem mit dieser Scheibe fest verbundenen und relativ zu dieser Scheibe ortsfesten Körper. Man könnte aber auch den Körper 113 anstelle einer Scheibe verwenden. Der Körper 113 würde dann für den Fall, daß er die Scheibe S1 oder S2 ersetzt, mit entsprechender Drehgeschwindigkeit angetrieben.

Es besteht aber auch die Möglichkeit, die Körper 113 in allen Ebenen der Kaskadenanordnung feststehend anzuordnen und nur die drehbaren Körper 111 anzutreiben, und zwar mit entsprechend unterschiedlichen Drehgeschwindigkeiten.

**Patentansprüche**

1. Spiralige Leitungsanordnung, die einen Endes mit einer um eine Drehachse (DA) hin- und herdrehbaren Vorrichtung und anderen Endes mit einer feststehenden Vorrichtung verbunden ist und bei einer Drehung der drehbaren Vorrichtung ein- oder ausgedreht wird, dadurch **gekennzeichnet**, daß die Leitungsanordnung durch mindestens zwei um die Drehachse (DA) ein- und ausdrehbare, in Kaskadenschaltung verbundene Leitungsspiralen (LS1, LS2) gebildet ist, die in Drehachsenrichtung nebeneinander angeordnet sind und mittels eines Antriebs bei einer Drehung der drehbaren Vorrichtung mit in einem vorbestimmten Verhältnis stehenden unterschiedlichen Umdrehungsgeschwindigkeiten ein- oder ausdrehend gedreht werden, und zwar mit abnehmender Umdrehungsgeschwindigkeit von der mit der drehbaren Vorrichtung verbundenen Leitungsspirale (LS2) zu der mit der feststehenden Vorrichtung verbundenen Leitungsspirale (LS1).

2. Leitungsanordnung nach Anspruch 1,
dadurch gekennzeichnet,
daß die Leitungsspiralen (LS1, LS2) mittels eines Getriebes (G) vom selben Antrieb drehbar sind.

3. Leitungsanordnung nach Anspruch 2,
dadurch gekennzeichnet,
daß das Getriebe (G) von der drehbaren Vorrichtung antreibbar ist.

4. Leitungsanordnung nach einem der Ansprüche 1 bis 3,
dadurch gekennzeichnet,
daß mindestens die weder mit der feststehenden noch mit der drehbaren Vorrichtung verbundenen Enden benachbarter Leitungsspiralen (LS1, LS2) in einer zwischen ihnen befindlichen Ebene (E1) festgelegt sind, die mittels des Antriebs bzw. Getriebes (G) um die Drehachse (DA) drehbar ist.

5. Leitungsanordnung nach Anspruch 4,
dadurch gekennzeichnet,
daß die nicht mit der feststehenden Vorrichtung verbundenen Leitungsspiralen je zwischen zwei drehbaren Ebenen (E1, E2) angeordnet sind, die mittels des Antriebs bzw. Getriebes (G) mit den unterschiedlichen Umdrehungsgeschwindigkeiten um die Drehachse (DA) drehbar sind, wobei die beiden Enden der je dazwischen befindlichen Leitungsspirale (LS1, LS2) in verschiedenen benachbarten Ebenen (E1, E2) festgelegt sind.

6. Leitungsanordnung nach mindestens einem der Ansprüche 1 bis 4,
dadurch gekennzeichnet,
daß die Differenz der Umdrehungsgeschwindigkeiten je benachbarter gedrehter Ebenen (E1, E2) konstant ist.

7. Leitungsanordnung nach mindestens einem der Ansprüche 4 bis 6,
dadurch gekennzeichnet,
daß die einzelnen drehbaren Ebenen (E1, E2) durch drehbare Scheiben (S1, S2) gebildet sind, an denen Leitungsspiralenden festgelegt sind.

8. Leitungsanordnung nach mindestens einem der Ansprüche 1 bis 7,
dadurch gekennzeichnet,
daß die Leitungsspiralen (LS1, LS2) benachbarten Kaskadeneinheiten umgekehrten Wikkelsinn besitzen, wenn die jeweils inneren Enden benachbarter Leitungsspiralen (LS1, LS2) und die jeweils äußeren Enden benachbarter Leitungsspiralen (LS1, LS2) miteinander verbunden sind.

9. Leitungsanordnung nach mindestens einem der Ansprüche 1 bis 7,
dadurch gekennzeichent,
daß die Leitungsspiralen (LS1, LS2) benachbarter Kaskadeneinheiten gleichen Wickelsinn besitzen, wenn jeweils ein inneres Ende einer Leitungsspirale (LS1, LS2) mit dem äußeren Ende der benachbarten Leitungsspirale (LS1, LS2) verbunden ist.

10. Leitungsanordnung nach mindestens einem der Ansprüche 4 bis 9,
dadurch gekennzeichnet,
daß die drehbaren Scheiben (S1, S2) mit Zahnkränzen (ZK) versehen sind, die mit Ritzeln (R) des Getriebes (G) kämmen.

11. Leitungsanordnung nach mindestens einem der Ansprüche 7 bis 9,
dadurch gekennzeichnet,
daß die drehbaren Scheiben (S1, S2) mittels Treibrad-, Treibriemen- oder Kettenantrieb drehbar sind.

12. Leitungsanordnung nach mindestens einem der Ansprüche 7 bis 11,
dadurch gekennzeichnet,
daß die Drehachse (DA) mit einer der drehbaren Scheiben (S1) drehfest verbunden ist.

13. Leitungsanordnung nach mindestens einem der Ansprüche 1 bis 12,
dadurch gekennzeichnet,
daß die Leitungsspiralen (LS1), LS2) durch Flachbandkabel gebildet sind, wobei benachbarte Leitungsspiralen (LS1, LS2) über Zwischenverbinder (ZV) gekoppelt sind.

14. Leitungsanordnung nach mindestens einem der Ansprüche 1 bis 13,
dadurch gekennzeichnet,
daß die Drehachse (DA) ein vorzugsweise auf Kugellagern (KL) gelagertes Hohlrohr (HR) ist, durch dessen Hohlraum mindestens eine Fluidleitung (FL) hindurchgeführt ist, die mit der drehbaren Vorrichtung mittels einer Drehkupplung (DK) verbunden ist.

15. Leitungsanordnung nach mindestens einem
der Ansprüche 1 bis 14,
dadurch gekennzeichnet,
daß die Kaskadenanordnung zwei Kaskadeneinheiten aufweist.

16. Leitungsanordnung nach mindestens einem
Ansprüche 1 bis 15,
dadurch gekennzeichnet,
daß anstelle von Leitungsspiralen je eine Leitungsführungsanordnung vorgesehen ist, die
einen hin- und herdrehbaren Körper (111), einen konzentrisch dazu angeordneten ortsfesten
Körper (113) und zwei in U-Schlaufenform gelegte Leitungsschlaufen (115, 117) aufweist,
wobei die
beiden Leitungsschlaufen (115, 117) konzentrisch zum Drehkörper (111) verlaufen und sich
je auf verschiedener Seite des Drehkörpers
(111) befinden und wobei bei jeder Leitungsschlaufe (115, 117) ein Ende (121) mit dem
drehbaren Körper (111) und das andere Ende
(123) mit dem ortsfesten Körper (113) verbunden ist (Figur 5).

17. Leitungsanordnung nach Anspruch 16,
dadurch gekennzeichnet,
daß der drehbare Körper (111) mit der Drehachse (DA) und der ortsfeste Körper (113) mit
einer der Scheiben (S0, S1, S2) der Kaskadenanordnung verbunden ist.

FIG. 1

FIG.2

FIG.3

FIG.4

FIG.5